(19) Europäisches Patentamt
European Patent Office
Office européen des brevets

(11) **EP 3 789 157 B1**

(12) **EUROPÄISCHE PATENTSCHRIFT**

(45) Veröffentlichungstag und Bekanntmachung des Hinweises auf die Patenterteilung:
**24.01.2024 Patentblatt 2024/04**

(21) Anmeldenummer: **20000279.8**

(22) Anmeldetag: **10.08.2020**

(51) Internationale Patentklassifikation (IPC):
**B23K 26/03** (2006.01) **B23K 26/12** (2014.01)
**B23K 26/146** (2014.01) **B23K 26/352** (2014.01)
**B23K 26/362** (2014.01) **B23K 26/356** (2014.01)
**B23K 26/0622** (2014.01)

(52) Gemeinsame Patentklassifikation (CPC):
**B23K 26/0624; B23K 26/032; B23K 26/034; B23K 26/12; B23K 26/1224; B23K 26/125; B23K 26/126; B23K 26/127; B23K 26/146; B23K 26/352; B23K 26/356; B23K 26/362**

(54) **VERFAHREN ZUR BEHANDLUNG EINER FESTKÖRPEROBERFLÄCHE**

METHOD FOR TREATING THE SURFACE OF A SOLID OBJECT

PROCÉDÉ DE TRAITEMENT D'UNE SURFACE DE SOLIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.09.2019 DE 102019006322**

(43) Veröffentlichungstag der Anmeldung:
**10.03.2021 Patentblatt 2021/10**

(73) Patentinhaber: **Leibniz-Institut für Oberflächenmodifizierung e.V.
04318 Leipzig (DE)**

(72) Erfinder:
• **Zajadacz, Joachim
04107 Leipzig (DE)**
• **Anders, André
04155 Leipzig (DE)**
• **Ehrhardt, Martin
04329 Leipzig (DE)**
• **Zimmer, Klaus
04451 Borsdorf (DE)**
• **Lorenz, Pierre
04155 Leipzig (DE)**

(74) Vertreter: **Findeisen Neumann Scheit
Partnerschaft mbB
Straße der Nationen 88
09111 Chemnitz (DE)**

(56) Entgegenhaltungen:
EP-A1- 2 253 413 EP-A1- 2 283 960
WO-A1-2009/125284 US-A1- 2014 224 776
US-A1- 2016 201 184 US-B1- 6 621 040

**Beschreibung**

Die Erfindung betrifft ein Verfahren zur Behandlung einer Festkörperoberfläche, wobei das Verfahren die folgenden Schritte umfasst: (a) Bereitstellen eines fluiden Reaktionsmediums, (b) Zuführen des fluiden Reaktionsmediums zumindest in einer Bearbeitungszone zur Festkörperoberfläche und (c) Bestrahlung des fluiden Reaktionsmediums in der Bearbeitungszone mit einer Laserstrahlung, deren Laserfokus beabstandet zur Festkörperoberfläche im fluiden Reaktionsmedium angeordnet ist, sodass von der Laserstrahlung angeregtes fluides Reaktionsmedium in der Bearbeitungszone mit der Festkörperoberfläche wechselwirkt (siehe z.B. EP 2 283 960 A1, welche den Oberbegriff des Anspruchs 1 offenbart)

Die Behandlung von Festkörperoberflächen kann verschiedene Technologien umfassen. Beispielsweise kann eine derartige Technologie eine Oberflächenmodifizierung umfassen, bei der durch eine äußere Einwirkung auf die Festkörperoberfläche eine gezielte Einstellung von physikalischen und/oder chemischen Oberflächeneigenschaften (beispielsweise zur Oberflächenpassivierung) erreicht wird, ohne dass ein direkter Materialabtrag erfolgt. Ebenso kann die Behandlung der Festkörperoberfläche aber auch gezielt ein Materialabtrag von der Festkörperfläche oder eine Materialabscheidung auf der Festkörperoberfläche umfassen. Aus dem Stand der Technik sind zahlreiche Verfahren zur Behandlung von Festkörperoberflächen bekannt.

Beim reaktiven Ionenätzen (RIE) oder Plasmaätzen sowie anderen Arten der Anwendung von reaktiven Plasmen ist für einen Materialabtrag die Generierung von Ladungsträgern und reaktiven Komponenten in einer Gasphase erforderlich. Das erzeugte Plasma wechselwirkt mit der Festkörperoberfläche, was in einem Materialabtrag resultiert. Die Erzeugung des Plasmas wird in der Regel durch elektrische Felder erreicht, wobei für die Aufrechterhaltung des Plasmas oftmals ein Vakuum notwendig ist, um beispielsweise ausreichend große freie Weglängen in der Gasphase zu ermöglichen. Nachteilig ist in diesen Fällen die Notwendigkeit von vakuumerhaltenden Maßnahmen und die Einbringung von Elektroden in das Gefäß bzw. in der Nähe des Plasmas. Weiterhin müssen erhebliche Leistungen zur Aufrechterhaltung der Plasmen angewendet werden, von denen nur geringe Teile für die eigentliche Aktivierung von Teilchen erforderlich sind. Insgesamt ist mit einem erheblichen Eintrag der zugeführten Energie in das Werkstück zu rechnen, wodurch nachteilige Folgen (inhomogene Temperaturerhöhung des Werkstücks) einhergehen können, was auch eine kontrollierte Prozessführung erschwert.

In US 8 796 151 B2 wird vorgeschlagen, ein elektrisch gepumptes Plasma zu einer Oberflächenbearbeitung zu nutzen. Die durch die Wechselwirkung zwischen Plasma und Oberfläche ausgelösten Prozesse werden durch einen Wärmeeintrag an der Werkstückoberfläche durch eine Laserbestrahlung unterstützt. Durch eine direkte Bestrahlung des Werkstücks ergeben sich die Nachteile, dass (i) die Absorption der Laserstrahlung im Werkstück die Photonenabsorption (lokal unterschiedlich) beeinflusst und dass (ii) die Wärmedissipation im Werkstück die bei sonst gleichen Parametern erzielte Oberflächentemperatur verändert.

Zum Auftragen von Materialien auf eine Festkörperoberfläche ist weiterhin das CVD Verfahren bekannt. Dieses Verfahren ist eine Methode des chemischen Gasphasenabscheidens, bei dem ein oder mehrere sogenannte gasförmige Ausgangssubstanzen (Precursoren) in die Umgebung der zu beschichtenden Werkstückoberfläche gebracht werden und dort durch eine chemische Reaktion in Schichtmaterial überführt werden. Durch Kondensation dieser Reaktionsprodukte bildet sich eine Schicht, die jeweils spezifische Eigenschaften, Haftfestigkeiten, Zusammensetzungen und Morphologien aufweisen kann. Die Aktivierung der Prozesse zur Umwandlung der Precursoren in die Beschichtung kann auf verschiedene Arten erfolgen. Laser-induzierte Prozesse können vor allem thermisch oder photochemisch ausgelöst werden.

Bei dem L-CVD Verfahren wird Laserstrahlung für die Aktivierung der Precursoren genutzt. Es wird dabei zwischen zwei Verfahren pyrolytischer oder photolytische Prozessführung unterschieden. Die pyrolytische Aktivierung erfordert hohe Temperaturen, die oftmals im Substrate erzeugt werden, wodurch Schädigungen des Werkstücks (Spannungen, thermische Zersetzung) auftreten können. Bei photochemischer Aktivierung müssen die Ausgangssubstanzen einen hohen Absorptionsquerschitt aufweisen und es müssen Bindungen der Moleküle gebrochen werden, wofür in der Regel Photonen im UV-Bereich erforderlich sind.

Für einen typischen Precursor wie Disilan ($Si_2H_6$), der für die Abscheidung von silizumhaltigen Schichten verwendet werden kann, ist beispielsweise Laserstrahlung von $F_2$-Lasern mit einer VUV Wellenlänge von 157 nm erforderlich. Bei photolytischer Aktivierung kann die Einstrahlung der Laserstrahlung vertikal oder horizontal zur Werkstückoberfläche erfolgen. Allerdings ist die Verwendung dieser sehr kurzwelligen Strahlung nachteilig, da die Erzeugung und der Transport in das Rektionsgefäß kompliziert ist und auch Prozesse in Substraten ausgelöst werden können, die zu deren Schädigung führen.

Bei allen zuvor aufgeführten Lösungen des Standes der Technik erfolgt die Aktivierung von reaktiven Gasen bzw. die Anregung zur Ausbildung eines Plasmas hinsichtlich Ausdehnung, Dichte und Aktivität in einer weitgehend geometrisch fixierten Form. Neben den bereits genannten Nachteilen ergibt sich darüber hinaus der Nachteil, dass eine Mustererzeugung auf der Oberfläche des Werkstücks alleinig durch die Bewegung des Plasmas relativ zur Oberfläche oder durch zusätzlich angebrachte Maskierungsschichten möglich ist. Somit bestehen nur wenige Einflussmöglichkeiten auf die Form und Geometrie der Wechselwirkung mit dem Werkstück. Die Form und Geometrie dieser Wechselwirkung wird häufig auch als Werkzeugfunktion bezeichnet.

Weiterhin ist es aus dem Stand der Technik bekannt, dass mit einer direkten Laserbestrahlung von Materialien ein Materialabtrag erzielt werden kann, der in der Regel durch physikalische Prozesse bestimmt wird und häufig als Laserablation bezeichnet wird. Laserablationsprozesse sind durch einen explosionsartigen Materialabtrag nach Überschreitung einer kritischen Energiedichte im Material, die durch die Absorption der Laserphotonen im Material eingebracht wird, gekennzeichnet. Infolge des physikalischen Charakters treten bei der Laserablation Schmelz- und Verdampfungsprozesse auf, die einerseits den Abtrag bewirken und andererseits auch die Eigenschaften des verbleibenden Materials im Bereich des Materialabtrags beeinflussen und ggf. verändern können. Mögliche Materialbeeinflussungen als Folge von Laserablationsprozessen können auch die Oberflächenform betreffen. So treten in der Umgebung oftmals unerwünschte Aufwürfe, Grate oder Schmelzkügelchen auf. Weiterhin kann die Materialzusammensetzung oder - struktur im Bereich des Laserabtrages nachteilig verändert werden. Eine entsprechende Anordnung wird beispielsweise in WO 89/05707 A1 gezeigt.

Der Laserstrahl wird zur Erzielung eines definierten Abtrages in der Regel fokussiert und weist nach der Fokussierung bei gaußförmiger Verteilung der Intensität einen Fokusdurchmesser von $2 \, r_g^f$ auf. Als Laserfokus wird im Allgemeinen der Punkt der stärksten Strahlbündelung verstanden. Der Materialabtrag ist bei der Laserablation in etwa auf die Bereiche des Fokus beschränkt, die eine über einem typischen Wert liegende Energiedichte beinhalten; in der Regel liegt der Durchmesser des Abtrags typischerweise im Bereich des einfachen bis zweifachen Fokusdurchmessers.

Bei der Laserbestrahlung von Festkörperoberflächen können zusätzlich Gase angewandt werden. Eine Apparatur und eine Methode zur Oberflächenbearbeitung von Gläsern, insbesondere von Quarzglas, unter Zuhilfenahme von Laserstrahlung und Gasströmen wird in WO 2012/129012 A1 vorgestellt. Hierbei wird der Laserstrahlfokus auf die Oberfläche des Werkstücks gebracht, wodurch diese aufgeheizt und der Gasstrom, verbessert mit dem Werkstückmaterial, wechselwirken kann. Durch Zugabe reaktiver Komponenten zum Gas kann die Oberfläche im bestrahlten Bereich unter Nutzung chemischer Prozesse verbessert abgetragen werden. Nachteilig bei dieser Lösung ist aber vor allem die notwendige hohe Temperatur nahe des Erweichungspunktes des Quarzglases, wodurch zusätzliche Effekte auftreten können, wie beispielsweise eine veränderte Zusammensetzung des Materials durch chemische Reaktionen des Glases mit Bestandteilen des verwendeten Gases oder der umgebenden Luft oder einfach durch chemisch/physikalische Prozesse im Material. Materialveränderungen allerdings können die anwendungsrelevanten Eigenschaften beeinflussen und damit die Anwendung solcher Materialbearbeitungsverfahren erschweren, bei denen hohe Temperaturen auftreten.

Um eine direkte Bestrahlung des Substrates zu vermeiden, werden in S. Elhadj etal., Laserinduced gas plasma etching of fused silica under ambient conditions, in: Proc. SPIE, 2012, pp. 853012-853022 verschiedene Bestrahlungskonfigurationen vorgeschlagen. Der Laserfokus liegt bei diesen Konfigurationen beabstandet zur Oberfläche des Werkstücks, so dass ein Plasma oberhalb dieser Oberfläche gezündet wird. Zur Variation der Form des Materialabtrages wird das Werkstück gegenüber dem Plasma bewegt. Für die Anregung des Plasmas wird ein Nd:YAG Laser mit einer Wellenlänge von 355 nm, Pulslängen von 7,5 ns und einer Pulswiederholrate von 10 Hz verwendet. Bei einer Laserpulsenergie von 25 mJ und einer Strahlbreite von 10 $\mu$m ergibt sich eine Energiedichte in der Größenordnung von $10^{12}$ W/cm$^2$. Nachteilig ist hierbei, dass obwohl der Laserfokus beabstandet zur Oberfläche des Werkstücks angeordnet ist, die hohen Laserpulsenergien einer derartigen Laseranregung in einer Schädigung des Werkstücks resultieren können, was auch in der Veröffentlichung von S. Elhadj et al. beschrieben wird. Eine Schädigung kann beispielsweise in Form von Mirkosrissen durch Druckwellen erzeugt werden, welche durch eine Expansion des Plasmas bei derartig hohen Laserenergien ausgelöst werden. Weiterhin wird durch die bei einer derartigen Laseranregung erzeugte laterale Ausdehnung des Plasmas ein verhältnismäßig großer Wirkungsbereich auf das Werkstück hervorgerufen, was in der Folge nur die Herstellung von verhältnismäßig großen Strukturgrößen auf der Oberfläche des Werkstücks zulässt. Ebenso wird auch hier eine Mustererzeugung auf der Oberfläche des Werkstücks alleinig durch die Bewegung des Plasmas relativ zur Oberfläche erreicht.

Aufgabe der Erfindung ist es, ein Verfahren zur Behandlung einer Festkörperoberfläche vorzuschlagen, bei dem der thermische Einfluss auf das Werkstück gering ist und bei dem die auf der Oberfläche des Werkstücks erzielbaren Strukturgrößen minimiert sind. Weiterhin sollen die Einflussmöglichkeiten auf die Form und Geometrie der Wechselwirkung mit dem Werkstück erhöht werden.

Diese Aufgabe wird mit einem Verfahren mit den Merkmalen des Anspruchs 1 gelöst.

Vorteilhafte Ausgestaltungen sind in den Ansprüchen 2 bis 26 aufgezeigt.

Die Bestrahlung des fluiden Reaktionsmediums in der Bearbeitungszone in der Nähe der Festkörperoberfläche erfolgt mit Laserstrahlung aus ultrakurzen Pulsen (kleiner 50 ps), einer Leistungsdichte von größer $10^{13}$ W/cm$^2$ im Laserfokus und einer Pulsenergie von kleiner 10 mJ. Mit einer derartigen Laserstrahlung kann eine Anregung des fluiden Reaktionsmediums erreicht werden, sodass die bei der Anregung entstehenden reaktiven Produkte mit der Oberfläche des Festkörpers in Kontakt kommen und die Oberflächenbehandlung erfolgt. Gleichzeitig wird durch die ultrakurzen Pulse die Pulsenergie gering gehalten, sodass beispielsweise nur eine geringe Expansion des fluiden Reaktionsmediums und/oder nur eine geringe thermische Anregung des fluiden Reaktionsmediums erzeugt und damit eine Schädigung beispielsweise in Form von Mikrorissen durch Druckwellen bzw. Wärmestrahlung des fluiden Reaktionsmediums vermieden wird.

Da neben der Anregung mittels Laserstrahlung prinzipiell keinerlei andere Energiezuführung zum fluiden Reaktionsmedium notwendig ist, werden die Eigenschaften des angeregten Reaktionsmediums durch den Laserstrahl und dessen Bündelung signifikant beeinflusst und können so durch Veränderung der Bündelung des Lasers gesteuert werden. Ein für technische Anwendungen wichtiger Vorteil besteht in der Korrelation von Intensitätsverteilung des Laserstrahls und der Anregung des fluiden Reaktionsmediums. Hierdurch wird ermöglicht, dass die Größe, die dreidimensionale Form, die Ausdehnung sowie andere Eigenschaften des angeregten Reaktionsmediums und damit die Behandlung der Werkstückoberfläche beeinflusst und eingestellt werden kann. Da die Primärprozesse der Anregung, d.h. die Photonenabsorption in extrem kurzen Zeiten erfolgt, ist eine verzögerungsfreie Einflussnahme auf die Anregung des Reaktionsmediums und damit der Oberflächenbehandlung möglich.

Ein besonderer Vorteil bei der Nutzung von Laserstrahlung mit Pulsdauern von kleiner 50 ps ist auch, dass nichtlineare Absorptionsprozesse im Brennpunkt der gebündelten Laserstrahlung genutzt werden können. Daher ist eine geringere Laserpulsenergie für die Anregung des Reaktionsmediums und die Materialbearbeitung im Vergleich zu der Verwendung von längeren Pulsdauern notwendig.

Ein genereller Vorteil des erfindungsgemäßen Verfahrens ist die Minimierung von laserinduzierten Materialveränderungen, da die unmittelbare Bestrahlung der Festkörperoberfläche mit hohen Energiedichten erfindungsgemäß vermieden wird. Weiterhin wird auch die Absorption der Laserphotonen von den Eigenschaften des Werkstücks entkoppelt, insbesondere von den Absorptions- und auch den Reflexionseigenschaften des Materials des Werkstücks. Hierdurch ist die sonst notwendige Abstimmung von Laserstrahleigenschaften und zu bearbeitendem Material nicht mehr zwingend notwendig, wodurch ein vorteilhaftes Verfahren realisierbar ist. Insbesondere können bei gleichen Eigenschaften der Laserstrahlung verschiedene Werkstückematerialien bearbeitet werden, da die direkte Wechselwirkung von Laserphotonen mit dem Werkstück nicht vorgesehen oder erforderlich ist.

Je nach Wahl des fluiden Reaktionsmediums kann die Oberflächenbehandlung durch einen Materialabtrag an der Festkörperoberfläche und/oder durch eine Veränderung der Materialeigenschaften an der Festkörperoberfläche oder auch durch ein Abscheiden weiterer Materialien aus dem fluiden Reaktionsmedium auf die Festkörperoberfläche erzielt werden.

Eine vorteilhafte Nutzung des Verfahrens ist die Bearbeitung von nicht direkt zugänglichen Flächen, die beispielsweise im Inneren von umschlossenen Hohlräumen liegen. Hierbei ist insbesondere vorgesehen, dass der Laserstrahl eine geeignete Wandung, die beispielsweise aus Glas besteht, durchdringt und so in adäquater Weise auch im Inneren von Hohlkörpern Materialbearbeitungsprozesse auslösen kann. Die Zuführung der reaktiven Fluide kann hierbei durch Kanäle erfolgen, die beispielsweise für die spätere Nutzung notwendig sind.

In einer bevorzugten Ausführung werden für die Laserstrahlung Pulsdauern kleiner 1 ps gewählt. Hierbei können nichtlineare Absorptionsprozesse im Brennpunkt der gebündelten Laserstrahlung verbessert ausgenutzt werden.

Mit dem erfindungsgemäßen Verfahren ist die Anregung des fluiden Reaktionsmediums dicht oberhalb der Festkörperoberfläche (mit einem Abstand größer 10 $\mu$m) möglich, ohne die Festkörperoberfläche ungewollt zu schädigen. Der Abstand des Laserfokus ist selbstverständlich aber so zu wählen, dass die Festkörperoberfläche im Wirkungsbereich des angeregten Reaktionsmediums liegt und die gewünschte Wechselwirkung zwischen Festkörperoberfläche und angeregtem Reaktionsmedium erfolgt. Beispielsweise ist der Abstand zwischen der Oberfläche des Werkstückes und dem Laserfokus so zu wählen, dass der Abstand kleiner als der Transportabstand der angeregten Komponenten des fluiden Reaktionsmediums, aber größer als 10 $\mu$m ist. Der Transportabstand wird durch die Lebensdauer der Anregung der angeregten Komponenten sowie deren Ausbreitungsgeschwindigkeit bestimmt und beschreibt letztlich den Weg, den ein angeregtes Teilchen des angeregten Reaktionsmediums in der Lebensdauer seiner Anregung zurücklegt und ist damit mit der aus Vakuumprozessen bekannten freien Weglänge vergleichbar. Damit ist eine für die Wechselwirkung ausreichende Interaktion zwischen dem angeregten Reaktionsmedium und der Festkörperoberfläche sichergestellt.

Es wird vorgeschlagen, dass die Laserstrahlung eine Pulswiederholrate von 1 kHz bis 10 MHz aufweist. Die Pulswiederholrate ist vorteilhafterweise so zu wählen, das eine Zeitdauer zwischen aufeinanderfolgenden Laserpulsen kürzer ist als eine Abklingzeit der angeregten Komponenten des fluiden Reaktionsmediums, sodass mit nachfolgenden Laserpulsen die Anregung dieser angeregten Komponenten aufrechterhalten oder weiter gesteigert werden kann. Als Abklingzeit wird die mittlere Zeit verstanden, in der ein angeregtes Teilchen des angeregten Reaktionsmediums nach dem Ende der Anregung durch die Laserstrahlung wieder in seinen nicht angeregten Zustand verfällt.

Weiterhin wird vorgeschlagen, dass das fluide Reaktionsmedium einen Druck von $10^2$ Pa bis $10^7$ Pa aufweist. Bei einem Druck des fluiden Reaktionsmediums nahe dem Normaldruck, kann der Aufbau der Einrichtung zur Durchführung des Verfahrens in einfacher Weise erfolgen, da insbesondere auf ein Druckgefäß und Pumpen, die im Gefäß einen Unterdruck erzeugen, verzichtet werden kann. Über eine Bearbeitung oberhalb oder unterhalb des Normaldrucks hingegen kann in vorteilhafter Weise Einfluss auf die Transportlänge der angeregten Komponenten des Reaktionsmediums genommen werden, was letztlich zum Optimieren des Abstandes zwischen Laserfokus und Festkörperoberfläche eingesetzt werden kann.

In einer vorteilhaften Ausgestaltung werden das von der Laserstrahlung angeregte Reaktionsmedium und die Festkörperoberfläche relativ zueinander bewegt werden. Über diese Relativbewegung kann das angeregte Reaktionsmedium in bestimmten Abschnitten der Festkörperoberfläche mit dieser in Wechselwirkung gebracht werden und damit eine vorgegebene Form der Oberflächenbehandlung erzeugt werden.

Bei der Anregung des Reaktionsmediums entsteht innerhalb dieses Reaktionsmediums ein Bereich aus angeregtem Reaktionsmedium. Dieser Bereich kann mit einer Umhüllenden beschrieben werden, wobei diese Umhüllende bildlich die Grenzfläche zwischen angeregtem und nicht angeregtem Reaktionsmedium darstellt. Gemäß der Erfindung wird eine äußere Form der Umhüllenden des angeregten Reaktionsmediums eingestellt. Somit kann der Bereich des angeregten Reaktionsmediums innerhalb des gesamten Reaktionsmediums beliebig ausgeformt werden. Beispielsweise kann der Bereich des angeregten Reaktionsmediums bohnenförmig ausgeformt sein. Über die Ausformung des angeregten Reaktionsmediums ist dabei der Bereich der Wechselwirkung zwischen angeregtem Reaktionsmedium und Festkörperoberfläche einstellbar.

In einer vorteilhaften Ausgestaltung wird innerhalb der Umhüllenden des Reaktionsmediums die Anregung des Reaktionsmediums hinsichtlich einer Anregungsintensität variiert. Damit kann neben dem Bereich der Wechselwirkung zwischen dem angeregten Reaktionsmedium und der Festkörperoberfläche auch die Intensität der Wechselwirkung innerhalb dieses Bereiches eingestellt werden.

Gemäß der Erfindung wird die äußere Form der Umhüllenden und in einer vorteilhaften Ausgestaltung auch die Variation der Anregungsintensität innerhalb der Umhüllenden durch Ausformung einer Fokusgeometrie des Laserfokus und/oder durch eine Relativbewegung des Laserfokus gegenüber dem fluiden Reaktionsmedium und/oder durch eine lokal variierte Verteilung des fluiden Reaktionsmediums in der Bearbeitungszone eingestellt. Eine derartige dreidimensionale Gestaltung des gebündelten Laserstrahls ist durch Anwendung von verzerrenden optischen Systemen sowie von elektronisch steuerbaren, die Phasenlage des Lichtes lokal beeinflussenden Elementen (spatial light modulator -SLM), realisierbar.

Weiterhin wird vorgeschlagen, dass der Laserfokus horizontal und/oder vertikal gegenüber der Festkörperoberfläche bewegt wird. Durch das horizontale Bewegen des Laserfokus gegenüber der Festkörperoberfläche ist damit zum einen ein "Verfahren" des angeregten Bereichs des fluiden Reaktionsmediums gegenüber der Festkörperoberfläche möglich, sodass der Bereich der Wechselwirkung zwischen dem angeregten Reaktionsmedium und der Festkörperoberfläche entlang der Festkörperoberfläche verschoben wird. Mit der vertikalen Bewegung des Laserfokus gegenüber der Festkörperoberfläche wird der Abstand zwischen Laserfokus und Festkörperoberfläche variiert, was es faktisch ermöglicht, das angeregte Reaktionsmedium an die Festkörperoberfläche heran- oder von dieser wegzuführen. Insbesondere kann bei einem Materialabtrag der Laserfokus nachgeführt werden, sodass der Abstand zwischen Laserfokus und Festkörperoberfläche konstant gehalten wird. Die genauen Werte der Nachführung sind rechnerisch über den lokal zu erwartenden Materialabtrag oder durch Nutzung geeigneter Diagnostiktools festlegbar. Mit einer Überlagerung der horizontalen und vertikalen Bewegung des Laserfokus ist es beispielsweise möglich, das angeregte Reaktionsmedium in einer Art Wellenbewegung über die Festkörperoberfläche zu führen. Neben dem Verfahren des angeregten Bereichs des fluiden Reaktionsmediums gegenüber der Festkörperoberfläche kann bei einer ausreichend schnellen horizontalen und/oder vertikalen Bewegung des Laserfokus auch eine vorgegebene Form der Umhüllenden des angeregten Bereichs des Reaktionsmediums erzeugt werden. Eine derartig schnelle Führung des Laserfokus ist durch die Anwendung von bekannten Scanneroptiken möglich. Weiterhin kann die horizontale und/oder vertikale Bewegung des Laserfokus so ausgestaltet sein, dass die vorgegebene Form der Umhüllenden des angeregten Bereichs des Reaktionsmediums nicht nur statisch gegenüber der Festkörperoberfläche angeordnet ist, sondern selbst gegenüber dieser horizontal und/oder vertikal verschoben wird. Darüber hinaus kann die horizontale und/oder vertikale Bewegung des Laserfokus auch so ausgeführt werden, dass bei der Verschiebung der Form der Umhüllenden des angeregten Bereichs des Reaktionsmediums die Form der Umhüllenden variiert wird. So kann beispielsweise bei einer Verschiebung eines anfänglich bohnenförmig ausgeformten Bereichs des angeregten Reaktionsmediums die Form in eine Pyramidenform übergehen. Auch für das Bilden einer vorgegebenen Umhüllenden des angeregten Bereichs des Reaktionsmediums ist die Nutzung von Laserstrahlen mit ultrakurzen Pulsen vorteilhaft.

In einer weiterführenden Ausgestaltung werden eine Geschwindigkeit der horizontalen Bewegung des Laserfokus und/oder eine Geschwindigkeit der vertikalen Bewegung des Laserfokus und/oder eine Geschwindigkeit der Relativbewegung zwischen dem angeregten Reaktionsmedium und der Festkörperoberfläche variiert. Eine weitere Ausführung sieht vor, dass bei der horizontalen und/oder vertikalen Bewegung des Laserfokus und/oder der Relativbewegung zwischen dem angeregten Reaktionsmedium und der Festkörperoberfläche eine Pulswiderholrate der Laserstrahlung variiert wird.

Weiterhin wird vorgeschlagen, dass bei der horizontalen und/oder vertikalen Bewegung des Laserfokus und/oder der Relativbewegung zwischen dem angeregten Reaktionsmedium und der Festkörperoberfläche die Leistungsdichte der Laserstrahlung im Laserfokus verändert wird. Ebenso wird in vorteilhafter Ausführung bei der horizontalen und/oder vertikalen Bewegung des Laserfokus und/oder der Relativbewegung zwischen dem angeregten Reaktionsmedium und der Festkörperoberfläche die Pulsdauer der Laserstrahlung variiert. Über diese genannten Größen ist sowohl die äußere Form der Umhüllenden, als auch die Verteilung der Anregungsintensität innerhalb der Umhüllenden des Bereichs des angeregten Reaktionsmediums beeinflussbar. Dabei können die Größen jeweils einzeln angewendet, als auch untereinander kombiniert werden. Im Ergebnis sind also die Eigenschaften des reaktiven Reaktionsmediums im angeregten Bereich lokal einstellbar und schnell steuerbar. Wird beispielsweise eine hochrepetierende Laserstrahlung mit Pulswiederholraten im MHz-Bereich eingesetzt und der Laserfokus mit hoher Geschwindigkeit horizontal und vertikal nahe der Oberfläche des Werkstückes bewegt, so kann eine virtuelle Verteilung des angeregten Reaktionsmediums eingestellt werden kann, wodurch sich eine virtuelle Werkzeugfunktion einstellen lässt. Damit ergibt sich eine dreidimensionale Verteilung der Anregung in der Nähe der Festkörperoberfläche, wodurch sich definierte Muster in die Festkörperoberfläche einbringen lassen. Auch zum Erzeugen einer Intensitätsverteilung der Anregung im angeregten Bereich des Reaktionsmediums sind ultrakurze Laserpulse vorteilhaft.

Das bei der Durchführung des Verfahrens zugeführte fluide Reaktionsmedium wird je nach Anforderung an die Oberflächenbehandlung ausgewählt. In einer Ausgestaltung wird das fluide Reaktionsmedium so ausgewählt, dass die Wechselwirkung zwischen angeregtem Reaktionsmedium und Festkörperoberfläche in einem Materialabtrag von der Festkörperoberfläche resultiert. In einer weiteren Ausführung wird das das fluide Reaktionsmedium so ausgewählt, dass aufgrund der Wechselwirkung zwischen angeregtem Reaktionsmedium und Festkörperoberfläche eine Materialabscheidung aus dem angeregten Reaktionsmedium auf der Festkörperoberfläche erfolgt. In einer weiteren Ausführung wird das fluide Reaktionsmedium so ausgewählt, dass aufgrund der Wechselwirkung zwischen angeregtem Reaktionsmedium und Festkörperoberfläche eine Modifizierung der Festkörperoberfläche erfolgt. Je nach Art des fluiden Reaktionsmediums kann das angeregte Reaktionsmedium beispielsweise ein Plasma sein.

In einer vorteilhaften Ausgestaltung enthält das fluide Reaktionsmedium zumindest eine chemisch reaktive Komponente in Form von Gas, Aerosol, Flüssigkeitströpfchen oder kleinen Partikeln. Es wird vorgeschlagen, dass die chemisch reaktive Komponente Wasserstoff, Sauerstoff, oxidierende Verbindungen, halogenhaltige Verbindungen oder Kohlenwasserstoffe beinhaltet.

In spezifischer Ausführung werden fluorhaltige Kohlenwasserstoffe verwendet, die durch das Laserplasma so aktiviert werden, dass Radikale entstehen, die die Werkstückoberfläche insbesondere dann angreifen und abtragen können, wenn diese silikatische Bestandteile J beinhaltet.

Bei der Verwendung von Halogen-Kohlenwasserstoffen sieht eine spezielle Ausführung vor, zusätzlich zu den fluorhaltige Kohlenwasserstoffen erfindungsgemäß ein oxidierendes Gas, insbesondere Sauerstoff, zu verwenden. Hierdurch soll vor allem die Umwandlung von stabilen Kohlenwasserstoffreaktionsprodukten in leicht flüchtige Komponenten begünstigt werden, wodurch Maskierungseffekte der Oberfläche vermieden werden können und ein stabilerer Materialabtrag ermöglicht wird.

Vorteil der Erfindung ist auch, dass die chemisch reaktive Komponenten des fluiden Reaktionsmediums so gewählt werden können, dass diese erst durch die Wirkung des Laserstrahles aktiviert werden und so die anderen Teile der Oberflächen und Anlagenteile keiner Wechselwirkung mit dem angeregten Reaktionsmedium ausgesetzt sind. Hierdurch ist eine einfachere Konstruktion von Anlagenkomponenten erreichbar. Beispielsweise kann hierdurch die Anwendung spezieller Gehäuse und Abschirmungen entfallen, da die Wirkung von reaktiven Komponenten räumlich, insbesondere auf die Werkstückoberfläche, eng begrenzt ist. Ein damit zusammenhängender Vorteil ist auch, dass Verunreinigungen von Komponenten von Gehäuse und Einbauteilen, die mit den aktivierten reaktiven Komponenten in Berührung kommen und flüchtige Produkte bilden, deutlich vermindert oder ganz vermieden werden.

In einer vorteilhaften Ausgestaltung wird das fluide Reaktionsmedium in der Bearbeitungszone als Fluidstrom über die Festkörperoberfläche geführt wird. Eine weitere Ausführung sieht vor, dass die Variation der lokalen Verteilung des fluiden Reaktionsmediums erfolgt, indem eine Strömungsgeschwindigkeit des Fluidstroms variiert wird. Auch die Strömung des Fluidstroms stellt letztlich (auch in Kombination mit den o.g. Einflussmöglichkeiten) eine weitere Einflussgröße sowohl auf die äußere Form der Umhüllenden, als auch für die Variation der Anregungsintensität innerhalb der Umhüllenden dar. Daneben kann der Fluidstrom auch Beiträge zur Kühlung der Festkörperoberfläche liefern. Eine Ausführung sieht vor, dass mittels einer entsprechenden Regel- und/oder Steuereinrichtung der Fluidstrom pulsartig ausgestoßen wird. Diese Pulsung des Gasstromes kann dabei synchron oder asynchron zur Laserpulsfolge angewendet werden.

In einer weiteren Ausführung erfolgt die Variation der lokalen Verteilung des fluiden Reaktionsmediums derart, dass innerhalb einer Bearbeitungszeit zunächst das fluide Reaktionsmedium und anschließend ein weiteres fluides Reaktionsmedium in der Bearbeitungszone zur Festkörperoberfläche geführt und von der Laserstrahlung angeregt wird. Beispielsweise wird also innerhalb der Bearbeitungszeit zunächst ein erstes Gas (fluides Reaktionsmedium) und anschließend ein weiteres Gas (weiteres fluides Reaktionsmedium) zugeführt. Somit kann beispielsweise in einem ersten Bearbeitungsschritt zunächst das erste Gas angeregt werden, welches beispielsweise in einem Materialabtrag von der Festkörperoberfläche resultiert. Durch anschließendes Einleiten des weiteren Gases anstelle des ersten Gases und der Anregung des weiteren Gases wird dann die zuvor freigelegte Festkörperoberfläche passiviert. Weiterhin ergibt sich der Vorteil, dass wenn bei einer Relativbewegung des Laserfokus gegenüber der Festkörperoberfläche vom ersten fluiden Reaktionsmedium auf das weitere fluide Reaktionsmedium gewechselt wird, verschiedene Bereiche der Festkörperoberfläche je nach Wahl des Reaktionsmediums unterschiedlich modifiziert werden können.

Eine Ausgestaltung sieht vor, dass der Laserstrahl senkrecht oder mit einem Winkel kleiner 90° gegenüber einer in der Bearbeitungszone an der Festkörperoberfläche anliegenden Tangentialebene ausgerichtet ist. In einer vorteilhaften Ausführung beträgt der der Winkel kleiner 10°.

Es wird vorgeschlagen, dass ein zusätzliches elektrisches und/oder ein magnetisches Wechsel- oder Gleichfeld im Bereich des Laserfokus bereitgestellt wird. Diese elektrischen und/oder magnetischen Felder beeinflussen die Werkstückoberfläche dahingehend, dass eine zusätzliche Energie verfügbar wird, die die physikalisch-chemischen Prozesse, beispielsweise die chemischen Reaktionen die zum Materialabtrag führen, begünstigt. Diese Felder können statisch oder dynamisch angelegt werden. Beispielsweise kann an das Werkstück oder einen Werkstückhalter eine Gleich-, Puls- oder Wechselspannung angelegt werden, wodurch im Bereich der Werkstückoberfläche ein elektrisches Feld entsteht, das auf die Ladungsträger im Laserplasma (angeregtes fluides Reaktionsmedium) einwirken kann. Bei geeigneter Wahl der Plasmaparameter, beispielsweise des Druckes im Plasma und der Feldstärke an der Werkstückoberfläche lassen sich geladene Teilchen aus dem Laserplasma in Richtung der Werkstückoberfläche extrahieren, wodurch ein gerichteter Teilchenfluss entsteht und darüber hinaus die extrahierten Teilchen eine erhöhte Teilchenenergie besitzen, die vorteilhaft an der Werkstückoberfläche nutzbar ist. Der Teilchenfluss kann durch ein zusätzlich wirkendes Magnetfeld in der Art beeinflusst werden, dass die zeitliche Einwirkung auf die Probenoberfläche von neutralen und unterschiedlich geladenen Teilchen separiert werden. Durch ein wirkendes Magnetfeld kann auch der Ionisierungsgrad der Teilchen im Plasma erhöht werden, was zu einem erhöhten Materialabtrag führen kann. Zusätzlich kann hierdurch das Plasmavolumen und damit die laterale Ausbreitung des Materialabtragbereiches geeignet beeinflusst werden.

In einer Ausführung weist das elektrische Gleichfeld eine Feldstärke von kleiner $10^5$ V/m auf und ist parallel zu einer in der Bearbeitungszone an der Festkörperoberfläche anliegenden Tangentialebene ausgerichtet.

Eine weitere Ausgestaltung sieht vor, dass das magnetische Gleichfeld senkrecht zur Festkörperoberfläche ausgerichtet ist.

Es wird vorgeschlagen, dass die Festkörperoberfläche zusätzlich geheizt oder gekühlt wird. Damit kann die Festkörperoberfläche auf einer bestimmten Temperatur gehalten werden. Diese Möglichkeit eröffnet erweiterte Einflussmöglichkeiten auf die Wechselwirkungsreaktionen von Laserplasma und Werkstück. Insbesondere werden die Oberflächenreaktionen sowie Adsorptions- und Desorptionsprozesse beeinflusst. Da erfindungsgemäß die Oberflächentemperatur eingestellt, geführt bzw. konstant gehalten wird sowie eine marginale Erwärmung des Substrates durch den Laserstrahl zu erwarten ist, ist eine einfache, berechenbare Wechselwirkung zu erwarten. Dies drückt sich technisch darin aus, dass eine Beeinflussung der Oberflächenbehandlung durch eine prozessgenerierte und prozessgrößenabhängige Temperaturverteilung zusätzlich zur Laserbestrahlung genutzt werden kann.

In einer vorteilhaften Ausführung wird zumindest ein Teil der Laserstrahlung außerhalb des Laserfokus auf die Festkörperoberfläche geleitet, wobei eine Leistungsdichte dieses Teils der Laserstrahlung auf der Festkörperoberfläche geringer ist als eine für einen Materialabtrag notwendige Leistungsdichte. Durch die über die Laserstrahlung auf die Festkörperoberfläche auftreffenden Photonen kann die Wechselwirkung zwischen dem angeregten Reaktionsmedium und der Festkörperoberfläche unterstützt werden, wobei die Leistungsdichte der Laserstrahlung auf der Festkörperoberfläche wiederum so niedrig ist, dass die Festkörperoberfläche durch die Laserstrahlung selbst kaum beeinflusst wird. Die Leistungsdichte der Laserstrahlung auf der Festkörperoberfläche kann beispielsweise dadurch gering gehalten werden, dass die Strahlungsoptik so ausgestaltet ist, dass die Laserstrahlung zwischen Laserfokus und Festkörperoberfläche stark aufgeweitet wird.

Neben der Möglichkeit, definierte Muster in die Festkörperoberfläche allein durch die Gestaltung der Anregung des Reaktionsmediums über der Festkörperoberfläche einzubringen, kann ergänzend auch mit einer Maskierung der Werkstückoberfläche gearbeitet werden. Beispielsweise werden zunächst Teile der Festkörperoberfläche mit einer Schicht versehen, die gegenüber einer Wechselwirkung mit dem angeregten Reaktionsmedium weniger empfindlich ist, was im klassischen Sinne durch Lithographieprozesse oder auch durch ein spezifisch geformtes, laserinduziertes Plasma erfolgen kann. Danach können die Betriebsbedingungen geändert werden und beispielsweise ein Materialabtrag von Festkörperoberfläche und Maskierung erfolgen.

In einer weiteren vorteilhaften Ausführungsform der Erfindung kann der laserinduzierte Plasmaprozess mit in-situ oder in-Prozess Messmethoden verbunden werden, um das Bearbeitungsergebnis zielgerichteter zu erreichen. Insbesondere bei der Präzisionsbearbeitung von Oberflächen lässt sich die Oberflächenform gleichzeitig zur Bearbeitung ständig kontrollieren, da technische Einrichtungen zur Anregung des Reaktionsmediums die optische Begutachtung der Oberfläche nicht behindern.

Nachfolgend werden Ausführungsbeispiele der Erfindung anhand der Zeichnungen erläutert. Es zeigen

Fig. 1    eine schematische Darstellung einer Ausführung einer Einrichtung zur Durchführung des erfindungsgemäßen Verfahrens

Fig. 2    eine Ätztiefenverteilung einer mithilfe einer Einrichtung gemäß Fig. 1 geätzten Stelle in Quarzglas

Fig. 3    ein Querschnittprofil entlang der in Fig. 2 eingezeichneten Linie

Fig. 4    maximal erreichte Ätztiefe in einer Quarzglasoberfläche in Abhängigkeit der verwendeten Laserleistung

Fig. 5    ist die Abhängigkeit der maximalen Tiefe von Ätzungen in eine Quarzglasoberfläche in Abhängigkeit des vertikalen Abstandes zwischen Fokuspunkt und Probenoberfläche

Fig. 6    Abhängigkeit der maximalen Tiefe einer Ätzung in eine Quarzglasoberfläche in Abhängigkeit der Ätzzeit

Fig. 7    eine schematische Darstellung einer weiteren Ausführung der Einrichtung zur Durchführung des erfindungsgemäßen Verfahrens

Fig. 8    eine schematische Darstellung einer weiteren Ausführung der Einrichtung zur Durchführung des erfindungsgemäßen Verfahrens

Fig. 9    eine schematische Darstellung einer weiteren Ausführung der Einrichtung zur Durchführung des erfindungsgemäßen Verfahrens

Fig. 10    eine schematische Darstellung einer weiteren Ausführung der Einrichtung zur Durchführung des erfindungsgemäßen Verfahrens

Fig. 11    eine schematische Darstellung einer weiteren Ausführung der Einrichtung zur Durchführung des erfindungsgemäßen Verfahrens

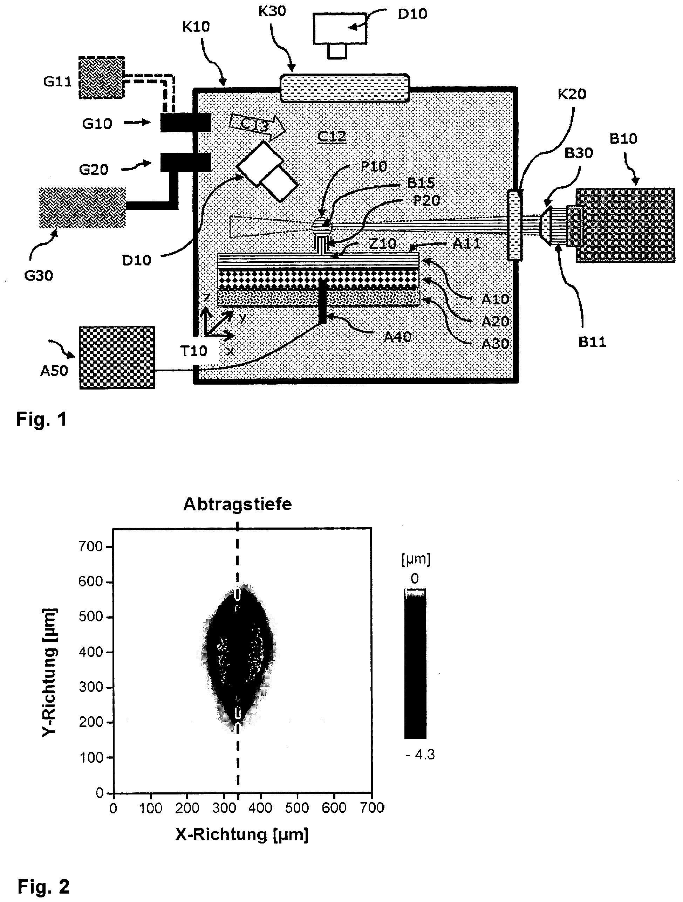

Fig. 1 zeigt eine schematische Darstellung einer Ausführung einer Einrichtung zur Durchführung des erfindungsgemäßen Verfahrens zur Behandlung einer Festkörperoberfläche. Ein Werkstück A10 auf einem Werkstückhalter A20 wird durch eine Heizeinrichtung A30 auf eine definierte Temperatur gebracht, die mittels eines Fühlers A40 bestimmt und zur Regelung der Temperatur mittels einer Regeleinrichtung A50 auf einen vorgegebenen Wert genutzt wird. Der Werkstückhalter A20 kann mittels Bewegungssystem T10 in alle drei Raumrichtungen bewegt werden. Das Werkstück A10, der Werkstückhalter A20 und die Heizeinrichtung A30 befinden sich in einer gasdichten Kammer K10. In diese Kammer K10 wird über eine Zufuhreinrichtung, die hier als Gaszuführung G10 ausgebildet ist, ein fluides Reaktionsmedium, das hier ein Gas oder Gasgemisch C12 ist, eingeleitet und in der Kammer K10 dem Werkstück zugeführt. Durch einen Gasauslass G20 wird gebrauchtes Gas aus der Kammer K10 entfernt. Durch eine Vakuumpumpe G30, welche mit dem Gasauslass G20 verbunden ist, kann ein Unterdruck in der Kammer K10 hergestellt werden. Ebenso kann über den Gaseinlass G10 aber auch ein Überdruck in der Kammer K10 erzeugt werden. In der Kammer K10 kann ein Arbeitsdruck von $10^2$ Pa bis $10^7$ Pa geschaffen werden. Ein Laser B10, der ultrakurze Laserpulse (Pulsdauer kleiner 50 ps) aussendet und dessen Laserstrahl B11 nahezu parallel zur Oberfläche A11 des Werkstücks A10 (Werkstückoberfläche, Festkörperoberfläche) ausgerichtet ist, wird durch ein optisches Element B30 geformt und gebündelt. Mit Hilfe des optischen Elementes B30 ist die Laserstrahlung in einem Laserfokus B15 innerhalb des fluiden Reaktionsmediums bündelbar und die Lage dieses Laserfokus B15 gegenüber der Oberfläche A11 des Werkstücks A10 veränderbar. Die Lage des Laserfokus B15 ist damit zum einen in Richtung Werkstückoberfläche A11 oder von dieser weg bewegbar. Zum anderen ist die Lage des Laserfokus B15 auch entlang der Werkstückoberfläche A11 führbar. Der Eintritt des Laserstrahles B11 erfolgt durch das Eintrittsfenster K20. Zum Zweck der Prozessführung und Prozesskontrolle sind verschiedene Diagnostiktools D10 verfügbar. Wenn ein Diagnostiktool D10 außerhalb der Kammer K10 positioniert ist, erfolgt die Inspektion des Prozesses über ein Beobachtungsfenster K30. Durch die Bündelung der Laserstrahlen B11 wird im Brennpunkt (Laserfokus B15) des optischen Elements B30 ein Plasma P10 erzeugt. Durch die Laserbestrahlung des Gasgemisches im Bündelungsbereich (Laserfokus B15) des Laserstrahls B11 wird das Gasgemisch derart aktiviert, dass eine Wechselwirkung zwischen dem laseraktivierten Gasteilchenstrom P20 einen Materialabtrag Z10 an der Oberfläche A11 des Werkstückes A10 bewirkt. Im Laserfokus weist die Laserstrahlung eine Leistungsdichte von größer $10^{13}$ W/cm$^2$ auf, wobei die Laserpulsenergie kleiner 10 mJ ist. Der Abstand des Laserfokus von der Werkstückoberfläche bzw. Festkörperoberfläche ist größer als 10 $\mu$m. Weiterhin sind mit dem Laser dieser Einrichtung Pulswiederholraten von 1 kHz bis 10 MHz einstellbar. In der dargestellten Ausführung ist der von der Laserstrahlung angeregte Bereich des fluiden Reaktionsmediums kugelförmig ausgebildet - eine Umhüllende des angeregten Bereich beschreibt also eine Kugeloberfläche. Neben einer Verschiebung des angeregten Bereichs entlang der Werkstückoberfläche A11 mittels der Verschiebung des Laserfokus über das optische Element B30 kann der angeregte Bereich des fluiden Reaktionsmediums auch durch eine Relativbewegung des Werkstückhalters bzw. des Werkstücks mithilfe des Bewegungssystems T10 erfolgen.

Fig. 2 zeigt einen farbkodierten Konturplot einer mittels erfindungsgemäßen Verfahrens erzeugten Materialabtrags in einem Quarzglas. Für den Materialabtrag wurde eine Einrichtung gemäß Fig. 1 verwendet, wobei die folgenden Parameter verwendet wurden: mittlere Laserleistung 350 mW, Abstand zwischen Fokuspunkt und Quarzglasoberfläche war 90 $\mu$m, Probentemperatur 350°C, Gasgemisch 3:1 $CF_4/O_2$ bei einen Umgebungsdruck von 0,8 bar. Die Laserparameter wurden wie folgt eingestellt: Pulsdauer 150 fs, Pulswiederholrate 1 kHz, Wellenlänge 775 nm, Brennweite der Fokussierungslinse 60 mm. Die Bearbeitungsdauer lag bei 5 min.

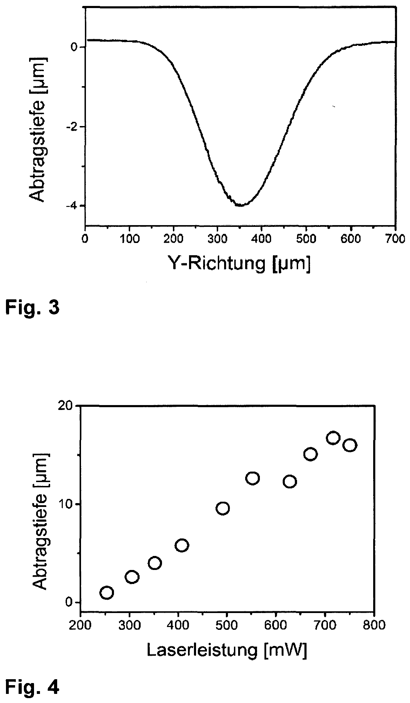

**Fig. 3** zeigt ein Querschnittprofil entlang der in **Fig. 2** eingezeichneten Linie. Neben der maximal erreichten Tiefe ist auch eine Tiefenverteilung des Materialabtrags von der ursprünglich glatten Oberfläche zu erkennen.

In **Fig. 4** ist die maximale erreichte Abtragstiefe in einer Quarzglasoberfläche in Abhängigkeit von der verwendeten Laserleistung dargestellt. Die Bearbeitungen wurden jeweils mit folgenden Parametern durchgeführt: mittlere Laserleistung 350 mW; Abstand zwischen Fokuspunkt und Quarzglasoberfläche von 90 $\mu$m, Probentemperatur 350°C, Gasgemisch 3:1 $CF_4/O_2$ bei einen Umgebungsdruck von 0,8 bar, Bearbeitungszeit 5 min.

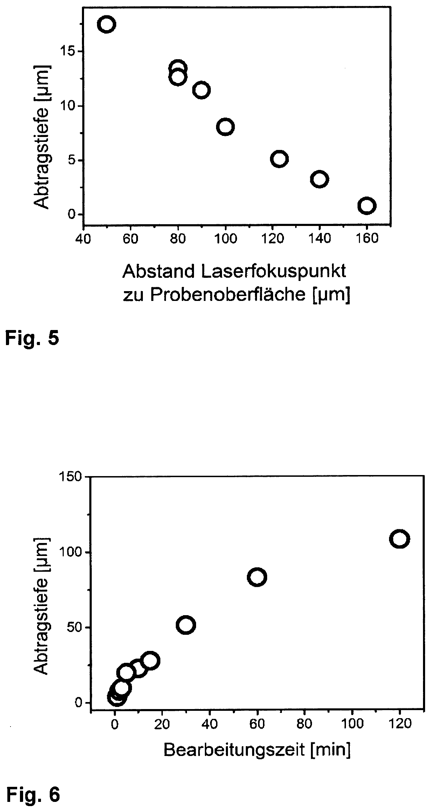

In **Fig. 5** ist die Abhängigkeit der maximalen Abtragstiefe an einer Quarzglasoberfläche in Abhängigkeit des vertikalen Abstandes zwischen Laserfokus und Probenoberfläche zu sehen. Die Bearbeitungen wurden mit folgenden Parametern durchgeführt: mittlere Laserleistung 750 mW; Probentemperatur 350°C, Gasgemisch 3:1 $CF_4/O_2$ bei einen Umgebungsdruck von 0,85 bar, Bearbeitungszeit 5 min.

In **Fig. 6** ist die Abhängigkeit der maximalen Abtragstiefe an einer Quarzglasoberfläche in Abhängigkeit der Bearbeitungszeit dargestellt. Die Bearbeitungen wurden mit folgenden Parametern durchgeführt: mittlere Laserleistung 750 mW; Abstand zwischen Fokuspunkt und Quarzglasoberfläche von 90 $\mu$m, Probentemperatur 350°C, Gasgemisch 3:1 $CF_4/O_2$ bei einen Umgebungsdruck von 0,8 bar. Eine kontinuierliche Zunahme der Abtragstiefe wird beobachtet, jedoch wird bei großen Abtragstiefen ein Sättigungsverhalten sichtbar.

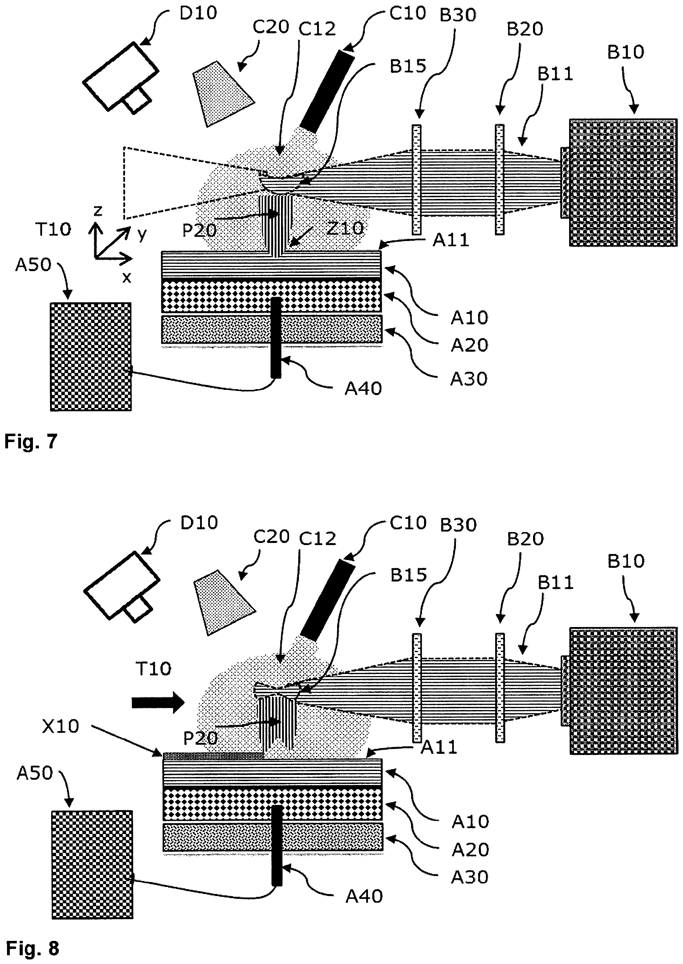

Die **Fig. 7** zeigt eine schematische Darstellung einer weiteren Ausführung der Einrichtung zur Durchführung des erfindungsgemäßen Verfahrens, wobei auch hier ein laseraktiviertes Gas, mittels Laserstrahlbündelung erzeugt wird. Das Werkstück A10 auf dem Werkstückhalter A20 wird durch die Heizeinrichtung A30 auf eine definierte Temperatur gebracht, die mittels des Fühlers A40 bestimmt wird und zur Regelung mittels der Regeleinrichtung A50 auf einen eingestellten Wert genutzt wird. Auch hier wird ein Laser B10 eingesetzt, der ultrakurze Laserpulse (Pulsdauer kleiner 1 ps) aussendet und dessen Strahl B11 nahezu parallel zur Oberfläche A11 des Werkstücks A10 ausgerichtet ist. Durch optische Elemente B20, B30 wird der Strahl B11 geformt und gebündelt. Hierbei dient das optische Element B20 vor allem zur Strahlformung B20, die durch Beeinflussung der Amplitude, der Phase oder sowohl der Amplitude als auch der Phase erfolgen kann. Dieser Strahl B11 wird durch das Fokussierungselement B30 gebündelt, so dass ein dreidimensionaler, bananenförmiger Laserfokus B15 entsteht. Beispielsweise kann das fokussierende Element B30 eine Linse oder ein Objektiv sein. Die Eigenschaften der Optiken B20 und B30 müssen aufeinander abgestimmt die Formung eins gekrümmten Zylinderfokus B15 ermöglichen. Durch eine Fluidzuführung C10 wird das fluide Reaktionsmedium in Form eines reaktiven Gasgemisches C12 zur Oberfläche A11 des Werkstücks A10 so zugeführt, dass die dem Bündelungsbereich B15 des Laserstrahls B11 gegenüberliegende Fläche der Werkstückoberfläche A11 bevorzugt getroffen wird. Eine bevorzugt gegenüber der Zuführungseinrichtung C10 liegende Absaugvorrichtung C20 entnimmt laufend oder zyklisch Teile des Reaktivgases. Durch den bananenförmig ausgebildeten Laserfokus B15 weicht die Form des angeregten Bereichs des fluiden Reaktionsmediums von der kugelförmigen Form gemäß Beschreibung zu **Fig. 1** ab. Die Einhüllende des angeregten Bereichs beschreibt hier eine "bananenförmige" Oberfläche. Auch hier sind der angeregte Bereich des fluiden Reaktionsmediums und die Werkstückoberfläche A11 sowohl mithilfe des Bewegungssystems T10, als auch über die Verschiebung des Laserfokus B15 mittels der Optiken B20 und B30 gegeneinander verschiebbar. Darüber hinaus ist auch der Laserfokus B15 vertikal gegenüber der Werkstückoberfläche A11 verschiebbar. Auch diese Verschiebung ist mithilfe des Bewegungssystems T10 und/oder den Optiken B20 und B30 realisierbar. Neben der bananenförmig ausgebildeten Umhüllenden sind je nach optischen Element B30 auch andersförmige Umhüllende bildbar.

Zum Zwecke der Prozessführung und -kontrolle sind verschiedene Diagnostiktools D10 vorgesehen. Diese Diagnostikeinrichtungen können beispielsweise umfassen:

- optische Mikroskope
- eine optische Oberflächenformvermessungseinrichtung, beispielsweise ein optisches Weißlichtinterferometer,
- ein optisches Plasmaspektrometer,
- elektronische Kamerasysteme.

**Fig. 8** zeigt schematisch eine weitere Ausführung einer Einrichtung zur Durchführung des erfindungsgemäßen Verfahrens. Auch hier ist das Werkstück A10 auf dem Werkstückhalter A20 angebracht wird und durch die Heizeinrichtung A30 auf eine definierte Temperatur bringbar. Der Laser B10 sendet ultrakurze Laserpulse (Pulsdauer kleiner 1 ps) mit Pulswiederholraten im Bereich von 10 kHz bis 10 MHz aus, wobei der Laserstrahl B11 nahezu parallel zur Oberfläche A11 des Werkstücks A10 ausgerichtet ist. Ebenfalls wird hier der Strahl B11 durch die optischen Elemente B20, B30 geformt und gebündelt. Die Einhüllende des angeregten Bereichs ist in der dargestellten Ausführung knochenförmig ausgebildet, wobei anders als bei der Ausführung gemäß **Fig. 7** die Einhüllende des angeregten Bereichs nicht durch die geometrische Ausgestaltung des Laserfokus, sondern durch eine schnelle vertikale und horizontale Führung des Laserfokus gegenüber der Werkstückoberfläche geformt wird. Die Optiken B20, B30 sind dafür so ausgelegt, dass der Laserfokus B15 mit einer Geschwindigkeit von 0,01 µm/s bis 400 m/s gegenüber der Festkörperoberfläche bewegbar ist. Darüber hinaus sind die Optiken B20, B30 so ausgestaltet, dass die Bewegung des Laserfokus so ausgeführt werden kann, dass eine Geschwindigkeit der horizontalen und/oder vertikalen Bewegung des Laserfokus variiert wird. Weiterhin ist das Bewegungssystem so in die Steuerung der Einrichtung eingebunden, dass die Bewegung des Werkstücks mit dem Bewegungssystem mit einer variierten Bewegungsgeschwindigkeit der Bewegung des Laserfokus überlagerbar ist. Der Laser ist so ausgelegt, dass bei der Variation der Bewegungsgeschwindigkeit des Bewegungssystems und/oder der Bewegungsgeschwindigkeit des Laserfokus die Pulswiederholrate und/oder die Leistungsdichte der Laserstrahlung und/oder die Pulsdauer der Laserstrahlung verändert werden und damit die Intensitätsverteilung der Anregung des fluiden Reaktionsmediums innerhalb der Einhüllenden variierbar ist. Neben der knochenförmigen ausgebildeten Umhüllenden sind je nach Strahl- und/oder Werkstückführung auch andersförmige Umhüllende bildbar. In der dargestellten Ausführung ist das fluide Reaktionsmedium so ausgewählt, dass die Wechselwirkung zwischen dem angeregten fluiden Reaktionsmedium und der Werkstückoberfläche A11 in einer Materialabscheidung X10 aus dem Reaktionsmedium auf der Werkstückoberfläche A11 resultiert.

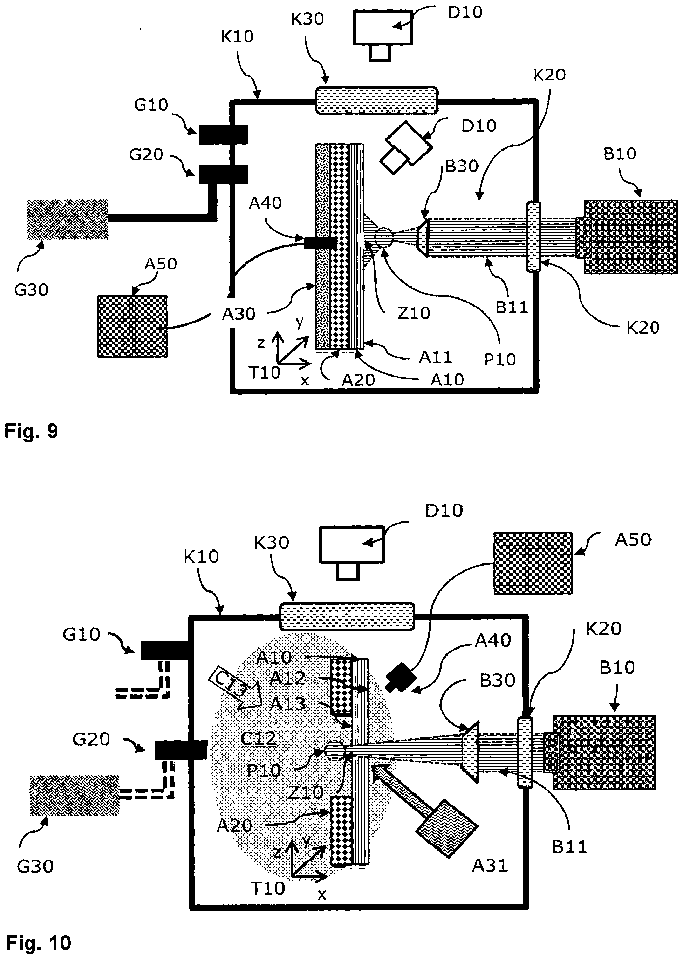

Eine weitere Ausführung der Einrichtung zur Durchführung des erfindungsgemäßen Verfahrens ist schematisch in **Fig. 9** zu sehen. Das Werkstück A10 auf dem Werkstückhalter A20 wird durch eine Heizeinrichtung A30 auf eine definierte Temperatur gebracht, die mittels des Fühlers A40 bestimmt und zur Regelung mittels der Regeleinrichtung A50 auf einen eingestellten Wert genutzt wird. Der Werkstückhalter A20 kann in alle drei Raumrichtungen bewegt werden. Das Werkstück A10, der Werkstückhalter A20 und die Heizeinrichtung A30 befinden sich ein einer Kammer K10. In diese Kammer K10 wird über die Gaszuführung G10 wird das fluide Reaktionsmedium in Form eines Gasgemisches, das reaktive Komponenten enthält, eingeleitet. Durch den Gasauslass G20 wird das Gas aus der Kammer entfernt.

Durch eine Vakuumpumpe G30, welche mit dem Gasauslass G20 verbunden ist, kann wenn erforderlich ein Unterdruck in der Kammer K10 eingestellt werden. Der Laser B10, der ultrakurze Laserpulse (Pulsdauer kleiner 50 ps) aussendet und dessen Strahl B11 nahezu senkrecht zur Oberfläche des Werkstücks A10 ausgerichtet ist, wird durch das optische Element B30 geformt und gebündelt. Der Eintritt des Laserstrahles erfolgt durch das Eintrittsfenster K20. Durch die Bündelung der Laserstrahlen B11 wird im Brennpunkt des optischen Elements B30 ein aktiviertes Gas P10 erzeugt. Das optische Element ist hierbei so dimensioniert, dass im Bündelungspunkt (Laserfokus) die erforderlichen hohen

Leistungsdichten (größer $10^{13}$ W/cm$^2$) erzielt werden. Nach dem Laserfokus wird die Laserstrahlung so aufgeweitet, dass die auf die Werkstückoberfläche auftreffende Laserstrahlung mittlere Leistungsdichten aufweist, die so gering sind, dass auf der Festkörperoberfläche kein allein durch die Laserbestrahlung generierter Materialabtrag erfolgt. Durch die Reaktion der aktivierten Gasbestandteile P10 wird einen Materialabtrag Z10 an der Oberfläche des Werkstückes A10 bewirkt. Zum Zweck der Prozessführung und Prozesskontrolle sind verschiedene Diagnostiktools D10 verfügbar. Wenn ein Diagnostiktool D10 außerhalb der Kammer K10 positioniert ist, erfolgt die Inspektion des Prozesses über das Beobachtungsfenster K30.

**Fig. 10** zeigt eine weitere Ausführung der Einrichtung zur Durchführung des erfindungsgemäßen Verfahrens. Hier ist das Werkstück A10 auf dem Werkstückhalter A20 befestigt und wird durch eine kontaktlose, auf Strahlungswärme basierende Heizeinrichtung (Wärmestrahlungsheizung A31), auf eine definierte Temperatur gebracht, die mittels des thermosensorischen Fühlers A40 bestimmt und zur Regelung mittels der Regeleinrichtung A50 auf einen eingestellten Wert genutzt wird. Der Werkstückhalter A20 kann in alle drei Raumrichtungen beispielsweise durch ein Verfahrtischsystem T10 bewegt werden. Das Werkstück A10 und der Werkstückhalter A20 befinden sich ein einer Kammer K10. In diese Kammer wird über die Gaszuführung G10 das fluide Reaktionsmedium in Form eines Gasgemisches eingeleitet. Durch den Gasauslass G20 wird das Gas aus der Kammer entfernt. Wahlweise kann eine Pumpe G30 mit dem Gasauslass verbunden werden. Der Laser B10, der ultrakurze Laserpulse (kleiner 50 ps) aussendet und dessen Strahl B11 nahezu senkrecht zur Oberfläche A11 des Werkstücks A10 ausgerichtet ist, wird durch das optische Element B30 geformt und gebündelt. Der Eintritt des Laserstrahles in die Kammer K10 erfolgt durch das Eintrittsfenster K20. Wahlweise können die Elemente zur Strahlbündelung B30 auch in der Kammer angeordnet werden. Durch die Bündelung der Laserstrahlen B11 wird im Bündelungspunkt B15 des optischen Elements B30 (Laserfokus) eine Laseraktivierung P10, die ein Plasma umfassen kann, erzeugt. Bei einen für die Laserstrahlung transparenten Werkstück A10 kann die Bündelung auch auf der Rückseite A13 des Werkstückes A10 erfolgen. Durch die Wechselwirkung zwischen Laserstrahlung und Gas C12 in der Kammer K10 wird das Gas derart aktiviert, dass es einen Materialabtrag an der Oberfläche A11 des Werkstückes A10 bewirkt. Der Materialabtrag kann auf der strahlzugewandten Oberfläche A12 als auch auf der strahlabgewandten Oberfläche A13 erfolgen und ist hier an der Rückseite dargestellt. Durch das Einleiten und Ausleiten des fluiden Reaktionsmediums wird in der Kammer K10 ein Fluidstrom C13 des fluiden Reaktionsmediums erzeugt, der durch geeignete Stromführung dazu genutzt werden, die äußere Form der Umhüllenden des angeregten Reaktionsmediums und/oder die Anregungsintensität innerhalb der Umhüllenden zu variieren. Diese Variation kann beispielsweise durch lokal verschiedene Strömungsgeschwindigkeiten des Fluidstroms an der Festkörperoberfläche im Bearbeitungsbereich hervorgerufen werden. Ebenso kann beispielsweise auch eine Variation der Strömungsgeschwindigkeit des gesamten Fluidstroms genutzt werden. Eine derartige Variation ist beispielsweise eine Pulsung der Strömungsgeschwindigkeit.

In einer nicht dargestellten Ausführung ist die Zuführung C10 so ausgestaltet, dass zunächst ein erstes fluides Reaktionsmedium und anschließend ein weiteres fluides Reaktionsmedium in der Bearbeitungszone zur Festkörperoberfläche geführt werden kann.

Die in allen Ausführungsbeispielen aufgeführte separate Heizeinrichtung (in Form des beheizten Werkstückhalters oder der Wärrhestrahlungsheizung) ist allerdings nicht zwingend. Das erfindungsgemäße Verfahren ist grundsätzlich auch ohne derartige separate Heizeinrichtungen anwendbar.

Neben einer vertikalen oder horizontalen Ausrichtung der Laserstrahlung gegenüber der Werkstückoberfläche kann in einer nicht dargestellten Ausführung die Laserstrahlung auch mit einem Winkel kleiner 90° gegenüber einer an der Festkörperoberflächen anliegenden Tangentialebene ausgerichtet sein.

In einer weiteren nicht dargestellten Ausführung wird ein zusätzliches elektrisches und/oder ein magnetisches Wechsel- oder Gleichfeld im Bereich des Laserfokus bereitgestellt. Je nach Anforderung an die Oberflächenbehandlung weist das elektrische Gleichfeld eine Feldstärke von kleiner $10^5$ V/m auf und ist parallel zu einer in der Bearbeitungszone an der Festkörperoberfläche anliegenden Tangentialebene ausgerichtet. Im Falle eines magnetischen Gleichfeldes ist dieses senkrecht zur Festkörperoberfläche ausgerichtet.

Die Zusammensetzung des fluiden Reaktionsmediums richtet sich nach der Zielstellung der Oberflächenbehandlung, wobei das fluide Reaktionsmedium über Zugabe von chemisch reaktiven Komponenten entsprechend angepasst werden kann. Derartige reaktive Komponenten sind in Form von Gas, Aerosol, Flüssigkeitströpfchen oder kleinen Partikeln enthalten, wobei die chemisch reaktive Komponente Wasserstoff, Sauerstoff, oxidierende Verbindungen, halogenhaltige Verbindungen oder Kohlenwasserstoffe sein kann.

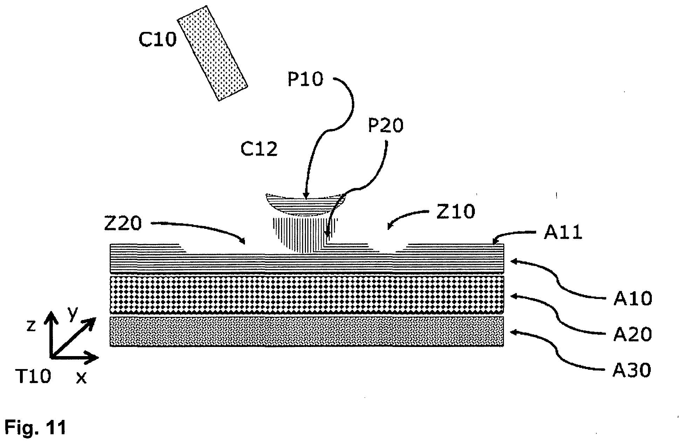

**Fig. 11** zeigt eine weitere Ausführung der Einrichtung zur Durchführung des erfindungsgemäßen Verfahrens. Diese Einrichtung entspricht im Wesentlichen der Ausführung gemäß **Fig. 7**. Dargestellt ist darüber hinaus eine Stelle Z10 mit einem durch Anwendung des erfindungsgemäßen Verfahrens erzeugten Materialabtrag, bei der das angeregte Reaktionsmedium nicht gegenüber der Werkstückoberfläche bewegt worden ist. Weiterhin ist eine Stelle Z20 gezeigt, die ebenfalls einen durch Anwendung des erfindungsgemäßen Verfahrens erzeugten Materialabtrag zeigt, wobei hier das angeregte Reaktionsmedium gegenüber der Werkstückoberfläche bewegt wird und damit ein linienhafter Abtrag entsteht.

## Bezugszeichenliste

| A10 | Werkstück |
| A11 | Oberfläche des Werkstücks |
| A12 | Vorderseite, Laserstrahl-zugewandte Seite des Werkstücks |
| A13 | Strahlzugewandte Seite des Werkstücks |
| A20 | Werkstückhalter |
| A30 | Heizeinrichtung |
| A31 | Wärmestrahlungsheizung |
| A40 | Fühler |
| A50 | Regeleinrichtung |
| B10 | Laser |
| B11 | Laserstrahl |
| B15 | Laserfokus |
| B20 | optisches Element |
| B30 | optisches Element |
| C10 | Fluidzuführung |
| C12 | fluides Reaktionsmedium |
| C13 | Fluidstrom |
| C20 | Absaugvorrichtung |
| D10 | Diagnostiktool |
| G10 | Gaszuführung |
| G11 | Gaszuführungsteuerung- und -regeleinrichtung |
| G20 | Gasauslass |
| G30 | Vakuumpumpe |
| K10 | Kammer |
| K20 | Eintrittsfenster |
| K30 | Beobachtungsfenster |
| P10 | Plasma |
| P20 | laseraktivierter, reaktiver Teilchenstrom |
| T10 | Bewegungssystem |
| T20 | Relativbewegung von Werkstück und Laserstrahlbündel |
| X10 | Materialabscheidung |
| Z10 | Materialabtrag |
| Z20 | Materialabtrag bei Relativbewegung des Laserfokus |

## Patentansprüche

1. Verfahren zur Behandlung einer Festkörperoberfläche (A11), wobei das Verfahren die folgenden Schritte umfasst:

   (a) Bereitstellen eines fluiden Reaktionsmediums (C12),
   (b) Zuführen des fluiden Reaktionsmediums (C12) zumindest in einer Bearbeitungszone zur Festkörperoberfläche (A11)
   (c) Bestrahlung des fluiden Reaktionsmediums (C12) in der Bearbeitungszone mit einer Laserstrahlung (B11), deren Laserfokus (B15) beabstandet zur Festkörperoberfläche (A11) im fluiden Reaktionsmedium (C12) angeordnet ist, sodass von der Laserstrahlung (B11) angeregtes fluides Reaktionsmedium in der Bearbeitungszone mit der Festkörperoberfläche (A11) wechselwirkt,

**dadurch gekennzeichnet,**
**dass** die Laserstrahlung (B11) eine Pulsdauer von kleiner 50 ps, im Laserfokus (B15) eine Leistungsdichte von größer $10^{13}$ W/cm$^2$ und eine Pulsenergie von kleiner 10 mJ aufweist und dass der Laserfokus (B15) in einem Abstand von größer 10 μm zur Festkörperoberfläche (A11) angeordnet ist und dass eine äußere Form einer Umhüllenden des angeregten Reaktionsmediums eingestellt wird und dass die äußere Form der Umhüllenden durch Ausformung einer Fokusgeometrie des Laserfokus (B15) und/oder durch eine Relativbewegung des Laserfokus (B15) gegenüber dem fluiden Reaktionsmedium (C12) und/oder durch eine lokal variierte Verteilung des fluiden Reaktionsmediums (C12) in der Bearbeitungszone erfolgt.

2. Verfahren nach Anspruch 1, **dadurch gekennzeichnet, dass** die Pulsdauer kleiner 1 ps ist.

3. Verfahren nach einem der vorgenannten Ansprüche, **dadurch gekennzeichnet, dass** die Laserstrahlung (B11) eine Pulswiederholrate von 1 kHz bis 10 MHz aufweist.

4. Verfahren nach einem der vorgenannten Ansprüche, **dadurch gekennzeichnet, dass** das fluide Reaktionsmedium (C12) einen Druck von $10^2$ Pa bis $10^7$ Pa aufweist.

5. Verfahren nach einem der vorgenannten Ansprüche, **dadurch gekennzeichnet, dass** das von der Laserstrahlung (B11) angeregte Reaktionsmedium und die Festkörperoberfläche (A11) relativ zueinander bewegt werden.

6. Verfahren nach einem der vorgenannten Ansprüche, **dadurch gekennzeichnet, dass** innerhalb der Umhüllenden des Reaktionsmediums die Anregung des Reaktionsmediums hinsichtlich einer Anregungsintensität variiert wird.

7. Verfahren nach Anspruch 6, **dadurch gekennzeichnet, dass** die Variation der Anregungsintensität innerhalb der Umhüllenden durch Ausformung einer Fokusgeometrie des Laserfokus (B15) und/oder durch eine Relativbewegung des Laserfokus (B15) gegenüber dem fluiden Reaktionsmedium (C12) und/oder durch eine lokal variierte Verteilung des fluiden Reaktionsmediums (C12) in der Bearbeitungszone erfolgt.

8. Verfahren nach einem der vorgenannten Ansprüche, **dadurch gekennzeichnet, dass** der Laserfokus (B15) horizontal und/oder vertikal gegenüber der Festkörperoberfläche (A11) bewegt wird.

9. Verfahren nach Anspruch 8, **dadurch gekennzeichnet, dass** der Laserfokus mit einer Geschwindigkeit von 0,01 μm/s bis 400 m/s gegenüber der Festkörperoberfläche (A11) bewegt wird.

10. Verfahren nach Anspruch 8 oder 9, **dadurch gekennzeichnet, dass** eine Geschwindigkeit der horizontalen Bewegung des Laserfokus (B15) und/oder eine Geschwindigkeit der vertikalen Bewegung des Laserfokus (B15) und/oder eine Geschwindigkeit der Relativbewegung zwischen dem angeregten Reaktionsmedium und der Festkörperoberfläche (A11) variiert wird.

11. Verfahren nach Anspruch 8, 9 oder 10, **dadurch gekennzeichnet, dass** bei der horizontalen und/oder vertikalen Bewegung des Laserfokus (B15) und/oder der Relativbewegung zwischen dem angeregten Reaktionsmedium und der Festkörperoberfläche (B15) eine Pulswiederholrate der Laserstrahlung (B11) variiert wird.

12. Verfahren nach Anspruch 8, 9, 10 oder 11, **dadurch gekennzeichnet, dass** bei der horizontalen und/oder vertikalen Bewegung des Laserfokus (B15) und/oder der Relativbewegung zwischen dem angeregten Reaktionsmedium und der Festkörperoberfläche (A11) die Leistungsdichte der Laserstrahlung (B11) im Laserfokus (B15) variiert wird.

13. Verfahren nach Anspruch 8, 9, 10, 11 oder 12, **dadurch gekennzeichnet, dass** bei der horizontalen und/oder vertikalen Bewegung des Laserfokus (B15) und/oder der Relativbewegung zwischen dem angeregten Reaktionsmedium und der Festkörperoberfläche (A11) die Pulsdauer der Laserstrahlung (B11) variiert wird.

14. Verfahren nach einem der vorgenannten Ansprüche, **dadurch gekennzeichnet, dass** das fluide Reaktionsmedium (C12) so ausgewählt wird, dass die Wechselwirkung zwischen angeregtem Reaktionsmedium und Festkörperoberfläche (A11) in einem Materialabtrag (Z10, Z20) von der Festkörperoberfläche (A11) oder in einer Materialabscheidung (X10) aus dem angeregten Reaktionsmedium auf der Festkörperoberfläche (A11) oder in einer Modifizierung der Festkörperoberfläche resultiert.

15. Verfahren nach einem der vorgenannten Ansprüche, **dadurch gekennzeichnet, dass** das fluide Reaktionsmedium (C12) zumindest eine chemisch reaktive Komponente in Form von Gas, Aerosol, Flüssigkeitströpfchen oder kleinen Partikeln enthält.

16. Verfahren nach Anspruch 15, **dadurch gekennzeichnet, dass** die chemisch reaktive Komponente Wasserstoff, Sauerstoff, oxidierende Verbindungen, halogenhaltige Verbindungen oder Kohlenwasserstoffe beinhaltet.

17. Verfahren nach einem der vorgenannten Ansprüche, **dadurch gekennzeichnet, dass** das fluide Reaktionsmedium in der Bearbeitungszone als Fluidstrom (C13) über die Festkörperoberfläche (A11) geführt wird.

18. Verfahren nach einem der Ansprüche 1 bis 6 und 17, **dadurch gekennzeichnet, dass** die äußere Form der Umhüllenden des angeregten Reaktionsmediums und/oder die Anregungsintensität innerhalb der Umhüllenden erfolgt, indem eine Strömungsgeschwindigkeit des Fluidstroms (C13) variiert wird.

19. Verfahren nach einem der Ansprüche 1 bis 6, **dadurch gekennzeichnet, dass** die äußere Form der Umhüllenden des angeregten Reaktionsmediums und/oder die Anregungsintensität innerhalb der Umhüllenden erfolgt, indem innerhalb einer Bearbeitungszeit zunächst das fluide Reaktionsmedium (C12) und anschließend ein weiteres fluides Reaktionsmedium (C12) in der Bearbeitungszone zur Festkörperoberfläche (A11) geführt und von der Laserstrahlung (B11) angeregt wird.

20. Verfahren nach einem der vorgenannten Ansprüche, **dadurch gekennzeichnet, dass** die Laserstrahlung (B11) senkrecht oder mit einem Winkel kleiner 90° gegenüber einer in der Bearbeitungszone an der Festkörperoberflächen (A11) anliegenden Tangentialebene ausgerichtet ist.

21. Verfahren nach Anspruch 20, **dadurch gekennzeichnet, dass** der Winkel kleiner 10° beträgt.

22. Verfahren nach einem der vorgenannten Ansprüche, **dadurch gekennzeichnet, dass** ein zusätzliches elektrisches und/oder ein magnetisches Wechsel- oder Gleichfeld im Bereich des Laserfokus (B15) bereitgestellt wird.

23. Verfahren nach Anspruch 22, **dadurch gekennzeichnet, dass** das elektrische Gleichfeld eine Feldstärke von kleiner $10^5$ V/m aufweist und parallel zu einer in der Bearbeitungszone an der Festkörperoberfläche (A11) anliegenden Tangentialebene ausgerichtet ist.

24. Verfahren nach Anspruch 22, **dadurch gekennzeichnet, dass** das magnetische Gleichfeld senkrecht zur Festkörperoberfläche (A11) ausgerichtet ist.

25. Verfahren nach einem der vorgenannten Ansprüche, **dadurch gekennzeichnet, dass** die Festkörperoberfläche (A11) zusätzlich geheizt oder gekühlt wird.

26. Verfahren nach einem der vorgenannten Ansprüche, **dadurch gekennzeichnet, dass** ein Teil der Laserstrahlung (B11) außerhalb des Laserfokus (B15) auf die Festkörperoberfläche (A11) geleitet wird und dass eine Leistungsdichte dieses Teils der Laserstrahlung (B11) auf der Festkörperoberfläche (A11) geringer ist als eine für einen rein laserinduzierten Materialabtrag notwendigen Leistungsdichte.

**Claims**

1. Method for treating a solid-body surface (A11), comprising the following steps:

   (a) Providing a fluid reaction medium (C12),
   (b) Supplying the fluid reaction medium (C12) to at least one processing zone of the solid-body surface (A11),
   (c) Irradiating the fluid reaction medium (C12) in the processing zone with laser radiation (B11), the laser focus (B15) of which is arranged at a distance from the solid-body surface (A11) in the fluid reaction medium (C12), such that fluid reaction medium excited by the laser radiation (B11) interacts with the solid-body surface (A11) in the processing zone,

   **characterised in that**
   the laser radiation (B11) has a pulse duration of less than 50 ps, a power density greater than $10^{13}$ W/cm$^2$ in the laser focus (B15), and a pulse energy of less than 10 mJ, and that the laser focus (B15) is positioned at a distance greater than 10 $\mu$m from the solid-body surface (A11), and that an external shape of an enclosing of the excited reaction medium is set, and that the external shape of the enclosing is formed by shaping a focus geometry of the laser focus (B15) and/or by a relative movement of the laser focus (B15) with respect to the fluid reaction medium (C12) and/or by a locally varied distribution of the fluid reaction medium (C12) in the processing zone.

2. Method according to claim 1, **characterised in that** the pulse duration is less than 1 ps.

3. Method according to one of the preceding claims, **characterised in that** the laser radiation (B11) has a pulse repetition rate of 1 kHz to 10 MHz.

4. Method according to one of the preceding claims, **characterised in that** the fluid reaction medium (C12) has a pressure of $10^2$ Pa to $10^7$ Pa.

5. Method according to one of the preceding claims, **characterised in that** the reaction medium excited by the laser radiation (B11) and the solid-body surface (A11) are moved relative to each other.

6. Method according to one of the preceding claims, **characterised in that**, within the enclosing of the reaction medium, the excitation of the reaction medium is varied with respect to excitation intensity.

7. Method according to claim 6, **characterised in that** the variation of the excitation intensity within the enclosing is carried out by shaping a focus geometry of the laser focus (B15) and/or by a relative movement of the laser focus (B15) with respect to the fluid reaction medium (C12) and/or by a locally varied distribution of the fluid reaction medium (C12) in the processing zone.

8. Method according to one of the preceding claims, **characterised in that** the laser focus (B15) is moved horizontally and/or vertically with respect to the solid-body surface (A11).

9. Method according to claim 8, **characterised in that** the laser focus is moved at a speed of 0.01 μm/s to 400 m/s with respect to the solid-body surface (A11).

10. Method according to claim 8 or 9, **characterised in that** a speed of the horizontal movement of the laser focus (B15) and/or a speed of the vertical movement of the laser focus (B15) and/or a speed of the relative movement between the excited reaction medium and the solid-body surface (A11) is varied.

11. Method according to claim 8, 9, or 10, **characterised in that** a pulse repetition rate of the laser radiation (B11) is varied during the horizontal and/or vertical movement of the laser focus (B15) and/or the relative movement between the excited reaction medium and the solid-body surface (B15).

12. Method according to claim 8, 9, 10, or 11, **characterised in that** the power density of the laser radiation (B11) in the laser focus (B15) is varied during the horizontal and/or vertical movement of the laser focus (B15) and/or the relative movement between the excited reaction medium and the solid-body surface (A11).

13. Method according to claim 8, 9, 10, 11, or 12, **characterised in that** the pulse duration of the laser radiation (B11) is varied during the horizontal and/or vertical movement of the laser focus (B15) and/or the relative movement between the excited reaction medium and the solid-body surface (A11).

14. Method according to one of the preceding claims, **characterised in that** the fluid reaction medium (C12) is selected such that the interaction between the excited reaction medium and the solid-body surface (A11) results in a removal of material (Z10, Z20) from the solid-body surface (A11), or in a deposition of material (X10) from the excited reaction medium on the solid-body surface (A11), or in a modification of the solid-body surface.

15. Method according to one of the preceding claims, **characterised in that** the fluid reaction medium (C12) contains at least one chemically reactive component in the form of gas, aerosol, liquid droplets, or small particles.

16. Method according to claim 15, **characterised in that** the chemically reactive component includes hydrogen, oxygen, oxidising compounds, halogen-containing compounds, or hydrocarbons.

17. Method according to one of the preceding claims, **characterised in that** the fluid reaction medium is directed over the solid-body surface (A11) as a fluid stream (C13) in the processing zone.

18. Method according to one of claims 1 to 6 and 17, **characterised in that** the forming of the external shape of the enclosing of the excited reaction medium and/or the excitation intensity takes place within the enclosing by varying the flow velocity of the fluid stream (C13).

19. Method according to one of claims 1 to 6, **characterised in that** the forming of the external shape of the enclosing of the excited reaction medium and/or the excitation intensity takes place inside the enclosing by first directing the fluid reaction medium (C12) and then an additional fluid reaction medium (C12) at the solid-body surface (A11) in the processing zone and said fluid reaction mediums are excited by the laser radiation (B11) within a processing period.

20. Method according to one of the preceding claims, **characterised in that** the laser radiation (B11) is oriented perpendicular or at an angle of less than 90° to a tangential plane adjacent to the solid-body surface (A11) in the processing zone.

21. Method according to claim 20, **characterised in that** the angle is less than 10°.

22. Method according to one of the preceding claims, **characterised in that** an additional alternating or constant electric and/or magnetic field is provided in the region of the laser focus (B15).

23. Method according to claim 22, **characterised in that** the constant electric field has a field strength of less than $10^5$ V/m and is aligned parallel to a tangential plane adjacent to the solid-body surface (A11) in the processing zone.

24. Method according to claim 22, **characterised in that** the constant magnetic field is aligned perpendicular to the solid-body surface (A11).

25. Method according to one of the preceding claims, **characterised in that** the solid-body surface (A11) is additionally heated or cooled.

26. Method according to one of the preceding claims, **characterised in that** a part of the laser radiation (B11) is directed at the solid-body surface (A11) outside the laser focus (B15) and **in that** the power density of said part of the laser radiation (B11) on the solid-body surface (A11) is lower than a power density necessary for purely laser-induced material removal.

**Revendications**

1. Procédé de traitement d'une surface de corps solide (A11), le procédé comprenant les étapes suivantes :

(a) préparation d'un milieu réactionnel fluide (C12), (b) amenée du milieu réactionnel fluide (C12) au moins dans une zone de traitement vers la surface du corps solide (A11), (c) irradiation du milieu réactionnel fluide (C12) dans la zone de traitement avec un rayonnement laser (B11), dont le foyer laser (B15) est disposé à distance de la surface du corps solide (A11) dans le milieu réactionnel fluide (C12), de sorte que le milieu réactionnel fluide excité par le rayonnement laser (B11) interagit dans la zone de traitement avec la surface du corps solide (A11),
caractérisé en ce que le rayonnement laser (B11) a une durée d'impulsion inférieure à 50 ps, présente dans le foyer laser (B15) une densité de puissance supérieure à $10^{13}$ W/cm$^2$ et une énergie d'impulsion inférieure à 10 mJ, et **en ce que** le foyer laser (B15) est disposé à une distance supérieure à 10 $\mu$m de la surface du corps solide (A11) et **en ce qu'**une forme extérieure d'une enveloppe du milieu réactionnel excité est réglée et **en ce que** la forme extérieure de l'enveloppe est réalisée par la formation d'une géométrie de foyer du foyer laser (B15) et/ou par un mouvement relatif du foyer laser (B15) par rapport au milieu réactionnel fluide (C12) et/ou par une répartition localement variable du milieu réactionnel fluide (C12) dans la zone de traitement.

2. Procédé selon la revendication 1, **caractérisé en ce que** la durée d'impulsion est inférieure à 1 ps.

3. Procédé selon l'une des revendications précédentes, **caractérisé en ce que** le rayonnement laser (B11) présente un taux de répétition d'impulsions de 1 kHz à 10 MHz.

4. Procédé selon l'une quelconque des revendications précédentes, **caractérisé en ce que** le milieu réactionnel fluide (C12) présente une pression de $10^2$ Pa à $10^7$ Pa.

5. Procédé selon l'une des revendications précédentes, **caractérisé en ce que** le milieu réactionnel excité par le rayonnement laser (B11) et la surface solide (A11) sont déplacés l'un par rapport à l'autre.

6. Procédé selon l'une des revendications précédentes, **caractérisé en ce qu'**à l'intérieur de l'enveloppe du milieu réactionnel, l'excitation du milieu réactionnel est modulée en termes d'intensité d'excitation.

7. Procédé selon la revendication 6, **caractérisé en ce que** la variation de l'intensité d'excitation à l'intérieur de l'enveloppe est obtenue par la formation d'une géométrie de foyer du foyer laser (B15) et/ou par un mouvement relatif du foyer laser (B15) par rapport au milieu réactionnel fluide (C12) et/ou par une répartition localement variable du milieu réactionnel fluide (C12) dans la zone de traitement.

8. Procédé selon l'une des revendications précédentes, **caractérisé en ce que** le foyer du laser (B15) est déplacé horizontalement et/ou verticalement par rapport à la surface du corps solide (A11).

9. Procédé selon la revendication 8, **caractérisé en ce que** le foyer du laser est déplacé à une vitesse de 0,01 $\mu$m/s à 400 m/s par rapport à la surface du corps solide (A11).

10. Procédé selon la revendication 8 ou 9, **caractérisé en ce qu'**on fait varier une vitesse de déplacement horizontal du foyer laser (B15) et/ou une vitesse de déplacement vertical du foyer laser (B15) et/ou une vitesse de déplacement relatif entre le milieu réactionnel excité et la surface du corps solide (A11).

11. Procédé selon la revendication 8, 9 ou 10, **caractérisé en ce que**, lors du mouvement horizontal et/ou vertical du foyer laser (B15) et/ou du mouvement relatif entre le milieu réactionnel excité et la surface du corps solide (B15), on fait varier un taux de répétition des impulsions du rayonnement laser (B11).

12. Procédé selon la revendication 8, 9, 10 ou 11, **caractérisé en ce que**, lors du mouvement horizontal et/ou vertical du foyer laser (B15) et/ou du mouvement relatif entre le milieu réactionnel excité et la surface du corps solide (A11), on fait varier la densité de puissance du rayonnement laser (B11) dans le foyer laser (B15).

13. Procédé selon la revendication 8, 9, 10, 11 ou 12, **caractérisé en ce que**, lors du mouvement horizontal et/ou vertical du foyer laser (B15) et/ou du mouvement relatif entre le milieu réactionnel excité et la surface du corps solide (A11), on fait varier la durée d'impulsion du rayonnement laser (B11).

14. Procédé selon l'une quelconque des revendications précédentes, **caractérisé en ce que** le milieu réactionnel fluide (C12) est choisi de telle sorte que l'interaction entre le milieu réactionnel excité et la surface du solide (A11) se traduise par un enlèvement de matière (Z10, Z20) de la surface du solide (A11) ou par une séparation de matière (X10) à partir du milieu réactionnel excité sur la surface du solide (A11) ou par une modification de la surface du corps solide.

15. Procédé selon l'une quelconque des revendications précédentes, **caractérisé en ce que** le milieu réactionnel fluide (C12) contient au moins un composant chimiquement réactif sous forme de gaz, d'aérosol, de gouttelettes de liquide ou de petites particules.

16. Procédé selon la revendication 15, **caractérisé en ce que** le composant chimiquement réactif comprend de l'hydrogène, de l'oxygène, des composés oxydants, des composés halogénés ou des hydrocarbures.

17. Procédé selon l'une des revendications précédentes, **caractérisé en ce que** le milieu réactionnel fluide est guidé dans la zone de traitement sous la forme d'un courant de fluide (C13) via la surface du corps solide (A11).

18. Procédé selon l'une des revendications 1 à 6 et 17, **caractérisé en ce que** la formation de la forme extérieure de l'enveloppe du milieu réactionnel excité et/ou l'intensité d'excitation à l'intérieur de l'enveloppe a lieu en faisant varier une vitesse d'écoulement du courant de fluide (C13).

19. Procédé selon l'une des revendications 1 à 6, **caractérisé en ce que** la forme extérieure de l'enveloppe du milieu réactionnel excité et/ou l'intensité d'excitation se fait à l'intérieur de l'enveloppe, en amenant dans un temps de traitement d'abord le milieu réactionnel fluide (C12) et ensuite un autre milieu réactionnel fluide (C12) dans la zone de traitement vers la surface du corps solide (A11) et en l'excitant par le rayonnement laser (B11).

20. Procédé selon l'une des revendications précédentes, **caractérisé en ce que** le rayonnement laser (B11) est orienté perpendiculairement ou à un angle inférieur à 90° par rapport à un plan tangentiel adjacent à la surface du corps solide (A11) dans la zone de traitement.

21. Procédé selon la revendication 20, **caractérisé en ce que** l'angle est inférieur à 10°.

22. Procédé selon l'une des revendications précédentes, **caractérisé en ce qu'**un champ électrique alternatif ou continu supplémentaire et/ou un champ magnétique alternatif ou continu est mis à disposition dans la zone du foyer laser (B15).

23. Procédé selon la revendication 22, **caractérisé en ce que** le champ électrique continu présente une intensité de champ inférieure à $10^5$ V/m et est orienté parallèlement à un plan tangentiel adjacent à la surface du corps solide (A11) dans la zone de traitement.

24. Procédé selon la revendication 22, **caractérisé en ce que** le champ magnétique continu est orienté perpendiculairement à la surface du corps solide (A11).

25. Procédé selon l'une des revendications précédentes, **caractérisé en ce que** la surface du corps solide (A11) est en outre chauffée ou refroidie.

26. Procédé selon l'une des revendications précédentes, **caractérisé en ce qu'**une partie du rayonnement laser (B11) est amenée sur la surface du corps solide (A11) en dehors du foyer laser (B15) et **en ce qu'**une densité de puissance de cette partie du rayonnement laser (B11) sur la surface du corps solide (A11) est inférieure à une densité de puissance nécessaire pour un enlèvement de matière purement induit par laser.

**Fig. 1**

**Abtragstiefe**

**Fig. 2**

**Fig. 3**

**Fig. 4**

Fig. 5

Fig. 6

**Fig. 7**

**Fig. 8**

**Fig. 9**

**Fig. 10**

**Fig. 11**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2283960 A1
- US 8796151 B2
- WO 8905707 A1
- WO 2012129012 A1

**In der Beschreibung aufgeführte Nicht-Patentliteratur**

- **S. ELHADJ et al.** Laserinduced gas plasma etching of fused silica under ambient conditions. *Proc. SPIE,* 2012, 853012-853022